# EUROPEAN PATENT APPLICATION

(11) **EP 3 964 473 A1**
(43) Date of publication of application: **09.03.2022**
(21) Application number: 21194322.0
(22) Date of filing: 01.09.2021
(51) Int. Cl.: B66F 11/04, E06C 5/38, B66C 23/80

(54) **HIGH-RISE LADDER TRUCK WITH UP-DOWN MOVING MEMBER**

(30) Priority: 02.09.2020 KR 20200111594
(71) Applicant: Dream TNS Co., Ltd., Yuseong-gu Daejeon 34026 (KR)
(72) Inventor: LEE, Sun Bok, 34951 Daejeon (KR); HAN, Jae Won, 35210 Daejeon (KR)
(74) Representative: Staeger & Sperling Partnerschaftsgesellschaft mbB

(57) **Abstract**

A high-rise ladder truck is disclosed. The ladder truck includes a turntable rotatably coupled to a loading portion of a vehicle and positioned at an upper surface of a rear portion of the loading portion, a ladder boom hinge-coupled to the turntable, a bogie coupled to the ladder boom and being movable along the ladder boom, a boom cylinder having one end coupled to the turntable and other end coupled to the ladder boom, the boom cylinder being able to expand and contract and configured to adjust a rotation angle of the ladder boom with respect to the turntable, an up-down moving member coupled to the rear portion of the loading portion, and an outrigger coupled to the up-down moving member.

## Description

### TECHNICAL FIELD

The present disclosure relates to a high-rise ladder truck with up-down moving member. More specifically, the present disclosure relates to a high-rise ladder truck with up-down moving member that prevents a bogie moving along a ladder boom from colliding with an outrigger.

### BACKGROUND

As the phenomenon of population concentration in large cities is accelerated, high-rise buildings are steadily increasing, and hence, the usage of high-rise ladder trucks is also continuously increasing. The high-rise ladder truck is configured such that it pulls out a multi-stage boom stand step by step in a longitudinal direction to extend the multi-stage boom stand to a predetermined length, settles the multi-stage boom stand at the height of the building, and raises and lowers a bogie along the multi-stage boom stand. Hence, the high-rise ladder truck can conveniently load and unload heavy objects such as packages for moving or cargo.

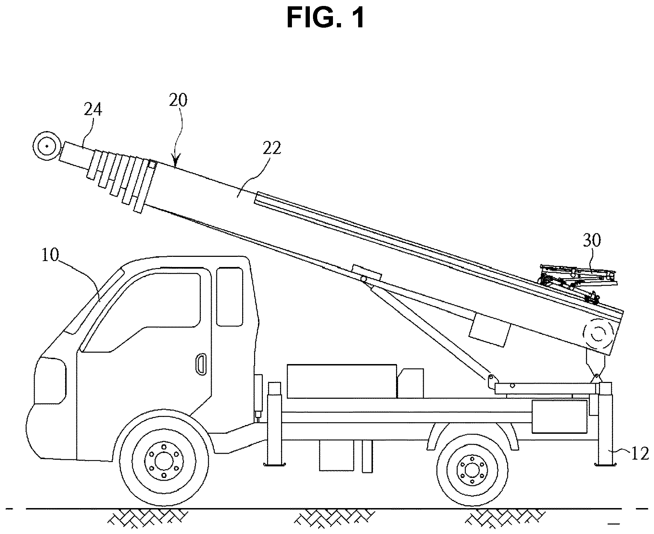

FIG. 1 illustrates a conventional high-rise ladder truck.

Referring to FIG. 1, a high-rise ladder truck includes a vehicle 10, a boom stand member 20 that is extended or shortened in length in a multi-stage structure in a loading box of the vehicle 10, a bogie 30 that is movably installed on the boom stand member 20, a winch means 40 for increasing or decreasing a length of the boom stand member 20, and a bogie lifting means (not shown) for moving the bogie 30.

The boom stand member 20 includes a main boom stand 22 that is rotatably installed in the loading box of the vehicle 10, and a plurality of movable boom stands 24 that is coupled to the main boom stand 22 in the multi-stage structure. The movable boom stands 24 are configured such that their widths are gradually reduced, and the movable boom stand 24 with a small width is sequentially inserted into the movable boom stand 24 with a large width. When the movable boom stands 24 extend (spread), the bogie 30 positioned on the main boom stand 22 moves up and down along the plurality of movable boom stands 24.

The vehicle 10 is equipped with an outrigger 12 contacting the ground. The outrigger 12 can prevent a vehicle body from shaking during a work process and secure a support force. Because the stability of the outrigger 12 is further improved as a distance between load points increases, the outrigger 12 is configured to expand and contract in a telescopic manner in which it is deployed in the multi-step structure in the left-right direction of the vehicle 10. However, when in a state in which the outrigger 12 is deployed in the multi-step structure in the left-right direction of the vehicle 10, the high-rise ladder truck moves the main boom stand 22 and adjusts its position so that the bogie 30 is lowered to a lower side of the main boom stand 22, and then lowers the bogie 30 in the downward direction, the bogie 30 collides with the outrigger 12. Hence, there is a problem in that the bogie 30 cannot be lowered in the downward direction.

### [Prior Art Document]

### [Patent Document]

(Patent Document 0001) Korean Patent No. 10-1675770

### SUMMARY

An object of the present disclosure is to address the above-described and other needs and/or problems. Another object of the present disclosure is to provide a high-rise ladder truck with up-down moving member that prevents a bogie moving along a ladder boom from colliding with an outrigger.

In one aspect of the present disclosure, there is provided a ladder truck comprising a turntable rotatably coupled to a loading portion of a vehicle and positioned at an upper surface of a rear portion of the loading portion; a ladder boom hinge-coupled to the turntable; a bogie coupled to the ladder boom and being movable along the ladder boom; a boom cylinder having one end coupled to the turntable and other end coupled to the ladder boom, the boom cylinder being able to expand and contract and configured to adjust a rotation angle of the ladder boom with respect to the turntable; an up-down moving member coupled to the rear portion of the loading portion; and an outrigger coupled to the up-down moving member, wherein the up-down moving member includes first and second cylinders coupled to the rear portion of the loading portion and protruding downward, the first and second cylinders being positioned with the loading portion interposed therebetween; and an up-down moving box positioned between the first cylinder and the second cylinder and guided by the first cylinder and the second cylinder to move up and down, wherein the outrigger is coupled to the up-down moving box.

The first cylinder and the second cylinder may be slidably coupled to both front ends of the up-down moving box. The outrigger may be coupled to both rear ends of the up-down moving box.

The ladder truck may further comprise a pair of moving guiders formed at both front ends of the up-down moving box, respectively, wherein the pair of moving guiders are formed to protrude upward so that they are able to be inserted into the first cylinder and the second cylinder, respectively. When the pair of moving guiders move up and down, the up-down moving box may move.

When the bogie is positioned at a lower end of the ladder boom, a lower end of the first cylinder and a lower end of the second cylinder may be positioned at the same height as the bogie or positioned lower than the bogie.

The ladder truck may further comprise a protrusion formed to protrude downward from a rear end of the loading portion. The first cylinder and the second cylinder may be positioned at front of the protrusion and are spaced apart from the protrusion. The up-down moving box may be positioned between the first cylinder, the second cylinder, and the protrusion.

Since the outrigger is configured to move to a lower part of the loading portion along the up-down moving box, the present disclosure has an advantage in that the bogie is not caught on the outrigger even if the bogie that is lowered to the lower part of the ladder boom is widely spread to the left and right.

In addition, since the up-down moving box is positioned in a space between the first and second cylinders and the protrusion, the present disclosure has an advantage of not requiring a separate space for mounting the up-down moving box.

### BRIEF DESCRIPTION OF THE DRAWINGS

The accompanying drawings, which are included to provide a further understanding of the disclosure and are incorporated in and constitute a part of the disclosure, illustrate embodiments of the disclosure and together with the description serve to explain the principle of the disclosure.
FIG. 1 illustrates a conventional high-rise ladder truck.
FIG. 2 illustrates a state in which an outrigger of a high-rise ladder truck with up-down moving member according to an embodiment of the present disclosure is not pulled out.
FIG. 3 illustrates a state in which an outrigger of a high-rise ladder truck with up-down moving member according to an embodiment of the present disclosure is pulled out.
FIG. 4 illustrates a side of an up-down moving member and a side of an outrigger of a high-rise ladder truck with up-down moving member according to an embodiment of the present disclosure.
FIG. 5 illustrates a rear of an up-down moving member and a rear of an outrigger of a high-rise ladder truck with up-down moving member according to an embodiment of the present disclosure.
FIG. 6 illustrates that a bogie is lowered to a lower part of a ladder boom in a state in which a turntable of a high-rise ladder truck with up-down moving member according to an embodiment of the present disclosure does not rotate.
FIG. 7 illustrates that a bogie is lowered to a lower part of a ladder boom in a state in which a turntable of a high-rise ladder truck with up-down moving member according to an embodiment of the present disclosure rotates.

### DETAILED DESCRIPTION

Reference will now be made in detail to embodiments of the disclosure, examples of which are illustrated in the accompanying drawings. Wherever possible, the same reference numbers will be used throughout the drawings to refer to the same or like parts. In general, a suffix such as "unit" and "portion" may be used to refer to elements or components. Use of such a suffix herein is merely intended to facilitate description of the present disclosure, and the suffix itself is not intended to give any special meaning or function. It will be noted that a detailed description of known arts will be omitted if it is determined that the detailed description of the known arts can obscure the embodiments of the disclosure.

The accompanying drawings are used to help easily understand various technical features and it should be understood that embodiments presented herein are not limited by the accompanying drawings. As such, the present disclosure should be construed to extend to any alterations, equivalents and substitutes in addition to those which are particularly set out in the accompanying drawings.

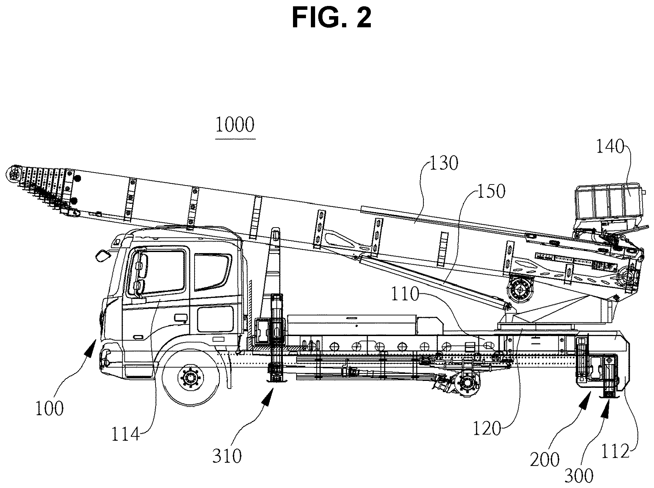

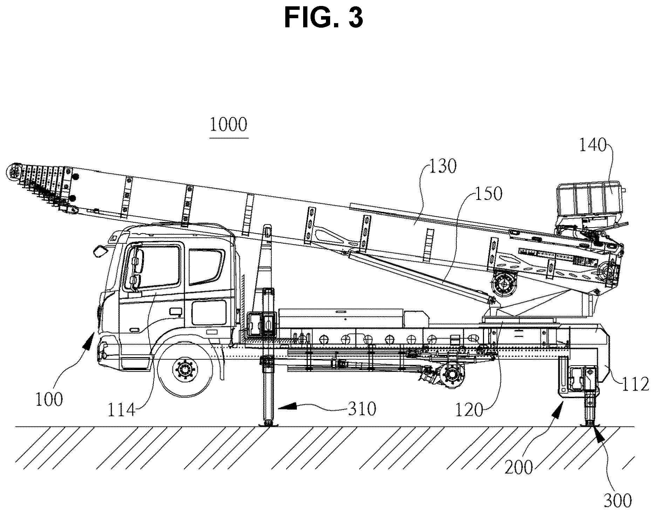

FIG. 2 illustrates a state in which an outrigger of a high-rise ladder truck with up-down moving member according to an embodiment of the present disclosure is not pulled out. FIG. 3 illustrates a state in which an outrigger of a high-rise ladder truck with up-down moving member according to an embodiment of the present disclosure is pulled out.

Referring to FIGS. 2 and 3, a high-rise ladder truck with up-down moving member 1000 according to an embodiment of the present disclosure may include a vehicle 100, an up-down moving member 200, and an outrigger 300. Hereinafter, the high-rise ladder truck with up-down moving member 1000 may be referred to as a ladder truck 1000.

The vehicle 100 may form a longitudinal direction. For example, the vehicle 100 may be formed to be elongated in the longitudinal direction. For example, the longitudinal direction of the vehicle 100 may be a front-rear direction. The vehicle 100 may include a loading portion 110. The loading portion 110 may be formed to be elongated in the longitudinal direction of the vehicle 100. For example, the longitudinal direction of the loading portion 110 may be parallel to the longitudinal direction of the vehicle 100. The loading portion 110 may form a rear portion of the vehicle 100. The loading portion 110 may be positioned at the rear of a driver's seat 114.

The vehicle 100 may include a turntable 120 that is rotatably coupled to an upper rear side of the loading portion 110, a multi-stage ladder boom 130 hinge-coupled to the turntable 120, a bogie 140 that is movably installed on the ladder boom 130, and a boom cylinder 150 adjusting a rotation angle of the ladder boom 130. The rotation angle of the ladder boom 130 may refer to a rotation angle of the ladder boom 130 with respect to the turntable 120. One end of the boom cylinder 150 may be coupled to the turntable 120. Other end of the boom cylinder 150 may be coupled to the ladder boom 130.

A protrusion 112 may be formed to protrude downward at a rear end of the loading portion 110.

Unless otherwise stated in the present disclosure, the rearward may refer to a direction from the driver's seat 114 toward the loading unit 110, and the forward may refer to a direction from the loading unit 110 toward the driver's seat 114.

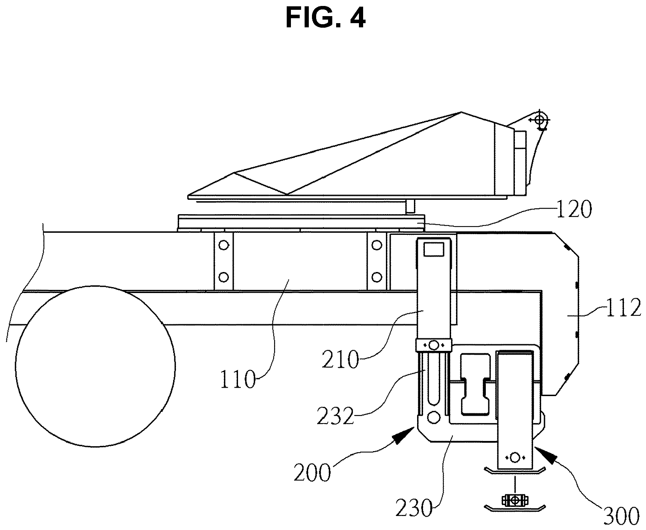

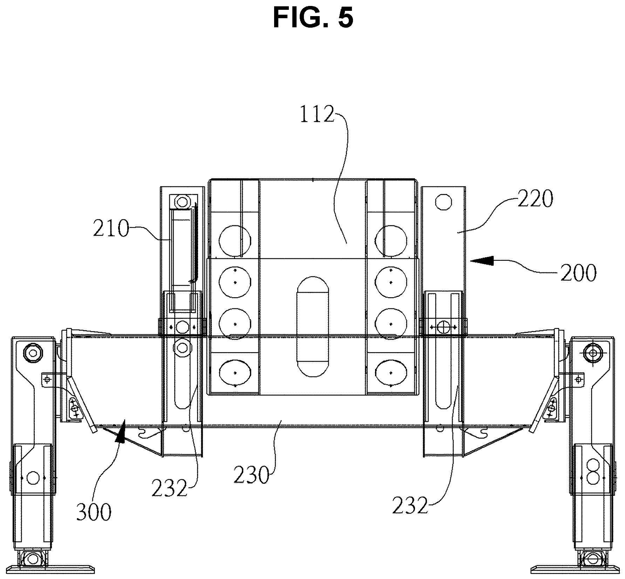

The up-down moving member 200 may be installed at the rear of the loading unit 110 so that the up-down moving member 200 can move up and down. The outrigger 300 may be installed at the up-down moving member 200 and configured to move up and down along the up-down moving member 200. The up-down moving member 200 and the outrigger 300 are described below with reference to FIGS. 4 and 5.

FIG. 4 illustrates a side of an up-down moving member and a side of an outrigger of a high-rise ladder truck with up-down moving member according to an embodiment of the present disclosure. FIG. 5 illustrates a rear of an up-down moving member and a rear of an outrigger of a high-rise ladder truck with up-down moving member according to an embodiment of the present disclosure.

Referring to FIGS. 2 to 5, the up-down moving member 200 may include a first cylinder 210, a second cylinder 220, and an up-down moving box 230.

The first cylinder 210 may be formed to protrude downward from the loading portion 110 at one side of the rear in the longitudinal direction of the loading portion 110. The second cylinder 220 may be formed to protrude downward from the loading portion 110 at other side of the rear in the longitudinal direction of the loading portion 110. The first cylinder 210 and the second cylinder 220 may be spaced apart from each other by a width of the loading portion 110 and may be positioned to face each other. In addition, the first and second cylinders 210 and 220 may be spaced apart from the front of the protrusion 112 to form an empty space between the first and second cylinders 210 and 220 and the protrusion 112.

The up-down moving box 230 may be formed in a box shape, for example, in a substantially hexahedral shape. The up-down moving box 230 may be positioned in the empty space between the first and second cylinders 210 and 220 and the protrusion 112. Since the up-down moving box 230 is positioned in the space between the first and second cylinders 210 and 220 and the protrusion 112 as described above, there is an advantage of not requiring a separate space for mounting the up-down moving box 230.

A pair of moving guiders 232 may be configured such that the first cylinder 210 and the second cylinder 220 move up and down in a state where the first cylinder 210 and the second cylinder 220 are respectively inserted into both front ends of the up-down moving box 230. The pair of moving guiders 232 may be formed to protrude upward so that they are respectively inserted into the first cylinder 210 and the second cylinder 220 at lower parts of both front ends of the up-down moving box 230. As the moving guiders 232 move up and down in a state of being inserted into the first cylinder 210 and the second cylinder 220, the up-down moving box 230 may move up and down. In this instance, in order to move up and down the moving guiders 232, hydraulic pressure, pneumatic pressure, etc. may be transmitted to the first cylinder 210 and the second cylinder 220.

The outrigger 300 may be mounted to move up and down along the up-down moving box 230. When the first cylinder 210 and the second cylinder 220 are respectively installed to be slidable on both front ends of the up-down moving box 230, the outrigger 300 may be installed at both rear ends of the up-down moving box 230. Further, a front outrigger 310 may be installed at front of the loading portion 110.

Each of the outrigger 300 and the front outrigger 310 described above may have a general shape in which it can be deployed in a multi-step structure as it is far away from the loading portion 110.

An operation of the high-rise ladder truck with up-down moving member according to an embodiment of the present disclosure is described below.

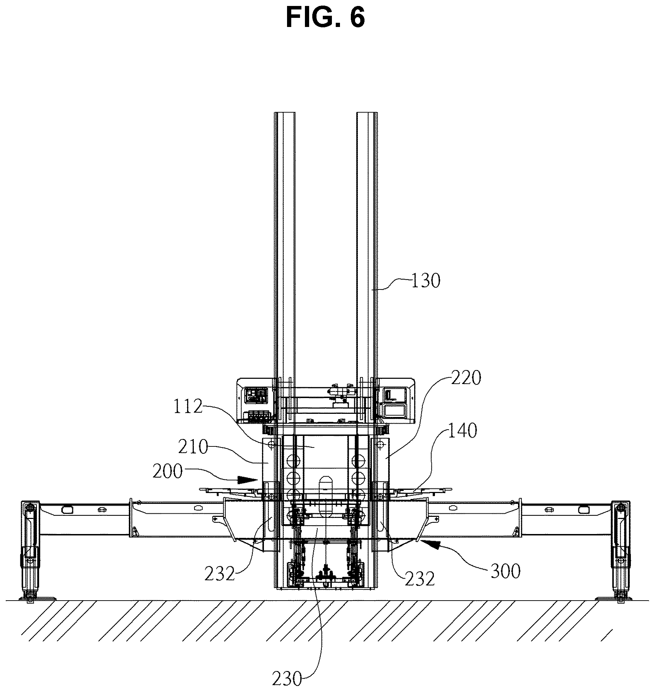

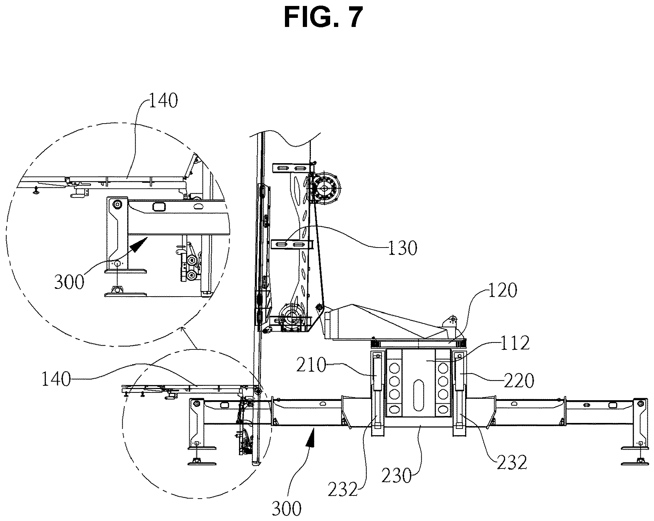

FIG. 6 illustrates that a bogie is lowered to a lower part of a ladder boom in a state in which a turntable of a high-rise ladder truck with up-down moving member according to an embodiment of the present disclosure does not rotate. FIG. 7 illustrates that a bogie is lowered to a lower part of a ladder boom in a state in which a turntable of a high-rise ladder truck with up-down moving member according to an embodiment of the present disclosure rotates.

First, referring to FIG. 6, after the first and second cylinders 210 and 220 lower the up-down moving box 230 and allow the outrigger 300 to move to a lower part of the loading portion 110, the outrigger 300 may be deployed and may stably support the loading portion 110. Thereafter, the boom cylinder 150 may adjust an angle of the ladder boom 130 in a state in which the ladder boom 130 is positioned to face the loading portion 110. Subsequently, the ladder boom 130 may be deployed and may maintain a predetermined length.

Thereafter, the bogie 140 may be lowered to a lower part of the ladder boom 130 so as to load external loads. In this instance, since the outrigger 300 moves to the lower part of the loading portion 110 along the up-down moving box 230, there is an advantage that the bogie 140 is not caught on the outrigger 300 even if the bogie 140 is widely spread to the left and right.

Lower ends of the first cylinder 210 and the second cylinder 220 may be positioned on the same line as the bogie 140 that is lowered to the lower part of the ladder boom 130, or may be positioned lower than the bogie 140. Hence, the up-down moving box 230 that is lowered to lower parts of the first and second cylinders 210 and 220 along the first and second cylinders 210 and 220 may be positioned lower than the bogie 140, and the outrigger 300 installed at the up-down moving box 230 may also be positioned lower than the bogie 140. Hence, there is an advantage that the bogie 140 does not interfere with the outrigger 300.

Next, referring to FIG. 7, after the first and second cylinders 210 and 220 lower the up-down moving box 230 and allow the outrigger 300 to move to the lower part of the loading portion 110, the outrigger 300 may be deployed and may stably support the loading portion 110. Thereafter, the boom cylinder 150 may adjust an angle of the ladder boom 130 in a state in which the ladder boom 130 rotates not to face the loading portion 110. Subsequently, the ladder boom 130 may be deployed and may maintain a predetermined length. Thereafter, the bogie 140 may be lowered to a lower part of the ladder boom 130 so as to load external loads. In this instance, since the outrigger 300 moves to the lower part of the loading portion 110 along the up-down moving box 230, there is an advantage that the bogie 140 is not caught on the outrigger 300 even if the bogie 140 is widely spread to the left and right.

Although the embodiments have been described with reference to a number of illustrative embodiments thereof, numerous other modifications and embodiments may be devised by those skilled in the art that will fall within the scope of the principles of the present disclosure. In particular, various variations and modifications are possible in the component parts and/or arrangements of the subject combination arrangement within the scope of the present disclosure, the drawings and the appended claims. In addition to variations and modifications in the component parts and/or arrangements, alternative uses will also be apparent to those skilled in the art. The scope of the present disclosure should be determined by rational interpretation of the appended claims, and all modifications within an equivalent scope of the present disclosure are included in the scope of the present disclosure.

## Claims

1. A ladder truck comprising:
a turntable rotatably coupled to a loading portion of a vehicle and positioned at an upper surface of a rear portion of the loading portion;
a ladder boom hinge-coupled to the turntable;
a bogie coupled to the ladder boom and being movable along the ladder boom;
a boom cylinder having one end coupled to the turntable and other end coupled to the ladder boom, the boom cylinder being able to expand and contract and configured to adjust a rotation angle of the ladder boom with respect to the turntable;
an up-down moving member coupled to the rear portion of the loading portion; and
an outrigger coupled to the up-down moving member,
wherein the up-down moving member includes:
first and second cylinders coupled to the rear portion of the loading portion and protruding downward, the first and second cylinders being positioned with the loading portion interposed therebetween; and
an up-down moving box positioned between the first cylinder and the second cylinder and guided by the first cylinder and the second cylinder to move up and down,
wherein the outrigger is coupled to the up-down moving box.

2. The ladder truck of claim 1, wherein the first cylinder and the second cylinder are slidably coupled to both front ends of the up-down moving box,
wherein the outrigger is coupled to both rear ends of the up-down moving box.

3. The ladder truck of claim 2, further comprising:
a pair of moving guiders formed at both front ends of the up-down moving box, respectively, wherein the pair of moving guiders are formed to protrude upward so that they are able to be inserted into the first cylinder and the second cylinder, respectively,
wherein when the pair of moving guiders move up and down, the up-down moving box moves.

4. The ladder truck of claim 2, wherein when the bogie is positioned at a lower end of the ladder boom, a lower end of the first cylinder and a lower end of the second cylinder are positioned at the same height as the bogie or positioned lower than the bogie.

5. The ladder truck of claim 1, further comprising:
a protrusion formed to protrude downward from a rear end of the loading portion,
wherein the first cylinder and the second cylinder are positioned at front of the protrusion and are spaced apart from the protrusion,
wherein the up-down moving box is positioned between the first cylinder, the second cylinder, and the protrusion.
